# EUROPÄISCHE PATENTSCHRIFT

(11) **EP 1 332 079 B1**
(45) Veröffentlichungstag und Bekanntmachung des Hinweises auf die Patenterteilung: **30.11.2005**
(21) Anmeldenummer: 01988675.3
(22) Anmeldetag: 24.10.2001
(51) Int. Cl.: B60S 1/42

(54) **VORRICHTUNG ZUM LÖSBAREN VERBINDEN EINES WISCHBLATTS MIT EINEM ANGETRIEBENEN WISCHERARM**
DEVICE FOR DETACHABLY CONNECTING A WIPER BLADE TO A DRIVEN WIPER ARM
DISPOSITIF DE RACCORDEMENT AMOVIBLE D'UNE RACLETTE D'ESSUIE-GLACE AVEC UN BRAS DE MONTURE COMMANDE

(30) Priorität: 28.10.2000 DE 10053601
(43) Veröffentlichungstag der Anmeldung: 06.08.2003
(73) Patentinhaber: ROBERT BOSCH GMBH, 70442 Stuttgart (DE)
(72) Erfinder: BREESCH, Frans, B-3840 Borloon (BE); WINDMOLDERS, Eric, B-3510 Kermt (BE); VERTONGEN, Robert, B-3800 Sinterueiten (BE)
(86) Internationale Anmeldenummer: PCT/DE2001/003985
(87) Internationale Veröffentlichungsnummer: WO 2002/034596

(56) Entgegenhaltungen:
- EP-A- 0 325 853
- GB-A- 1 126 594
- US-A- 3 621 507

## Beschreibung

### Stand der Technik

Wischblätter zum Reinigen von Kraftfahrzeugscheiben sind stets gelenkig mit dem die Arbeitsbewegung ausführenden Wischerarm verbunden, damit das Wischblatt gegenüber dem Wischerarm eine Pendelbewegung ausführen kann, deren Pendelachse quer zur Längserstreckung des Wischerarms und quer zur Richtung einer auf das Wischblatt einwirkenden Kraft liegt, mit welcher das Wischblatt an die Scheibe angelegt wird. Diese gelenkige Verbindung zwischen dem Wischblatt und dem Wischerarm ist von besonderer Bedeutung. Weil die zu wischende, in aller Regel sphärisch gekrümmte Scheibe nicht den Abschnitt einer Kugeloberfläche darstellt, muss sich das Wischblatt während seiner Wischbewegung ständig der jeweiligen Lage und dem Verlauf der Scheibenoberfläche anpassen können. Die Gelenkverbindung muss also leichtgängig aber auch spielfrei sein, damit eine ruhige, ratterfreie Wischbewegung möglich ist.

Bei einer bekannten, gemäß der Gattung des unabhängigen Anspruchs ausgebildeten Verbindungsvorrichtung

DE-A-2756317 ist das Anschlusselement als mit dem Wischerarm verrastbares Kunststoffteil ausgebildet, das zwei einander benachbarte, elastisch auslenkbare Lappen aufweist, von denen jeder - an seiner dem anderen Lappen zugewandten Seite - eine Lageraussparung für einen am Wischblatt fest angeordneten, quer zur Richtung der auf das Wischblatt ausgeübten Anlagekraft ausgerichteten Gelenkbolzen hat. Zur Montage beziehungsweise Demontage müssen die beiden Lappen soweit auseinander gespreizt werden, dass der Gelenkbolzen des Wischblatts eine der Lagersicherung dienende Engstelle passieren kann. Die beiden Lageraussparungen können somit den Gelenkbolzen nur teilweise umschlingen. Dies hat zur Folge, dass bei nicht sachkundigem Umgang mit dem am Arm angebrachten Wischblatt oder auch bei schwierigen Betriebsbedingungen beispielsweise im Winter, der Gelenkbolzen aus seinen Lageraussparungen gedrückt wird, weil die Lappen unbeabsichtigt ausgelenkt werden. Eine Erhöhung der Lagerspannung würde jedoch die erforderliche Leichtgängigkeit der Gelenkverbindung beeinträchtigen.

Mit der GB-A-1 126 594 ist eine Anschlussvorrichtung bekannt geworden, bei der das Gelenk durch das Zusammenwirken zweier loser Teile erreicht wird. Die beiden Teile bewegen sich gegeneinander, so dass Reibung und damit Verschleiß und Korrosion nicht verhindert werden können.

### Vorteile der Erfindung

Durch die Anordnung des Gelenks am Anschlusselement ergibt sich eine Trennung der beiden Funktionen Montage/Demontage und gelenkige Verbindung zwischen Wischerarm und Wischblatt. Deshalb müssen bei der Auslegung der Gelenkverbindung nur noch die Erfordernisse hinsichtlich Leichtgängigkeit und Spielfreiheit berücksichtigt werden. Auch kann das Gelenk vormontiert werden, so dass lediglich noch die einfachen Montageschritte zwischen dem Anschlusselement und dem Wischblatt beziehungsweise dem Wischerarm ausgeführt werden müssen, bei denen jedoch die Gefahr einer Beschädigung der empfindlichen Gummi-Wischlippe ausgeschlossen werden kann.

Größtmögliche Gestaltungsfreiheit bei einfacher Fertigung ist gewährleistet, weil das Anschlusselement aus einem Kunststoff hergestellt ist.

Da erfindungsgemäß der Kunststoff elastisch verformbar und das Gelenk als eine Einschnürung des Anschlusselements ausgebildet ist, ergibt sich ein sogenanntes Filmgelenk, bei dem keine Reibung und damit auch kein Verschleiß zwischen den beiden Gelenkteilen auftritt.

Eine hohe Stabilität in Arbeitsrichtung des Wischblatts bei guter Anpassung des Wischblatts an den Scheibenverlauf ist gewährleistet, wenn sich die Einschnürung im wesentlichen in Arbeitsrichtung des Wischblatts erstreckt, so dass sich ein streifenförmiges Filmgelenk ergibt.

Zweckmäßig ist die Einschnürung durch zwei einander gegenüberliegende, vorzugsweise keilförmige Aussparungen gebildet, zwischen denen ein die beiden so gebildeten Teile des Anschlusselements verbindendes Gelenkstück verbleibt. Dabei erstrecken sich die Einschnürungen quer zur Längsrichtung des Wischerarms.

Eine hohe Dauerfestigkeit des Gelenkteils wird erreicht, wenn das Gelenkstück durch stabilisierende Mittel armiert ist.

Besonders kostengünstig werden die stabilisierenden Mittel durch ein in den beiden Teilen des Anschlusselements verankertes Federstahlband gebildet.

Wenn weiter das eine, wischerarmseitige Teil des Anschlusselements mit dem Wischerarm verrastbar ist, ergibt sich eine besonders einfache Montage des Anschlusselements.

In weiterer Ausgestaltung des Erfindungsgedankens ist das im anderen, wischblattseitigen Teil des Anschlusselements verankerte Ende des Federstahlbands mit Fortsätzen ausgestattet, welche aus dem Anschlusselement heraustreten, und mit Mitteln zum Verbinden des Wischblatts mit diesem Teil des Anschlusselements versehen sind. Bei einem Wischblatt, welches als Tragelement für die gummielastische Wischleiste an Stelle einer mehrgliedrigen, vielgelenkigen Tragbügelkonstruktion ein langgestrecktes, federelastisches Band aufweisen, an dessen oberen Bandseite sich der Wischerarm befindet und an dessen anderen, unteren Bandseite eine die Wischarbeit ausführende, langgestreckte, gummielastische, zum Wischblatt gehörende Wischleiste angeordnet ist, ergibt sich eine besonders einfache und fertigungsgerechte Verbindung zwischen Wischblatt und dem wischblattseitigen Teil des Anschlusselements, wenn die aus dem wischblattseitigen Teil des Anschlusselements heraustretenden Verbindungsmittel krallenförmig ausgebildet sind und diese Krallen vorzugsweise die Längsseiten des bandartig langgestreckten Tragelements fest umgreifen.

Eine andere Ausführungsform des Erfindungsgedankens sieht vor, dass das Anschlusselement blockartig ausgebildet ist, dass es an einer dem Wischblatt zugewandten Wand des Wischerarms angeordnet ist, dass mit Abstand von dieser Wand Haltemittel des Anschlusselements am Wischblatt angreifen und dass zwischen den Haltemitteln und der Wand das Anschlusselements derart eingeschnürt ist, dass das die Wischblattanpassung ermöglichende Gelenkstück verbleibt.

Weitere vorteilhafte Weiterbildungen und Ausgestaltungen der Erfindung sind in der nachfolgenden Beschreibung von in der dazugehörigen Zeichnung dargestellten Ausführungsbeispielen angegeben.

### Zeichnung

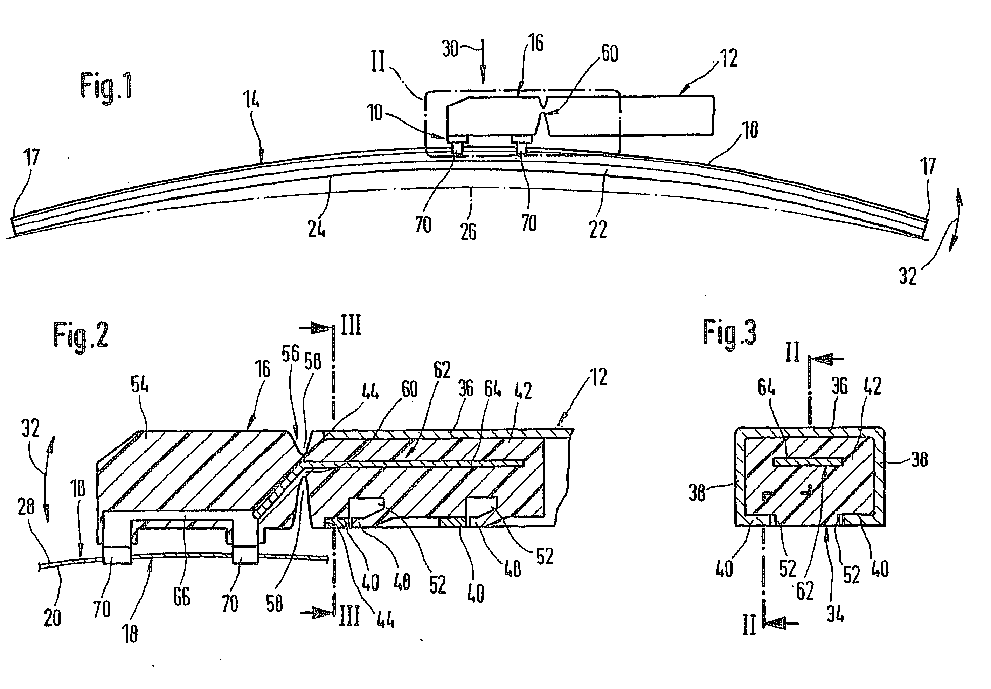

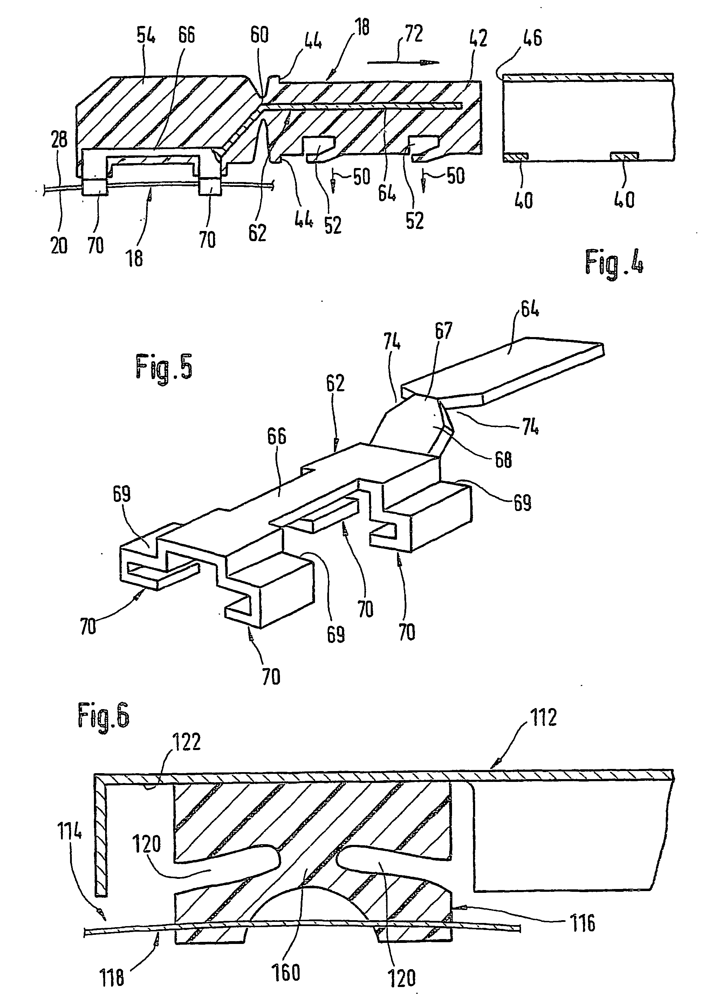

In der Zeichnung zeigen Figur 1 eine unmaßstäbliche Seitenansicht eines Wischblatts, das über ein Anschlusselement mit einem angetriebenen Wischerarm verbundenen ist, Figur 2 eine in Figur 1 mit II bezeichnende Einzelheit entlang der Linie II-II in Figur 3 geschnitten, vergrößert dargestellt, Figur 3 einen Querschnitt durch die Anordnung gemäß Figur 2 entlang der Linie III-III geschnitten, Figur 4 die Anordnung gemäß Figur 2, wobei das Anschlusselement samt dem mit diesem verbundenen Wischblatt vom Wischerarm getrennt ist, Figur 5 eine perspektivische, vergrößerte Darstellung einer im Anschlusselement angeordneten Armierung und Figur 6 einen Längsschnitt gemäß Figur 2 durch eine andere Ausführungsform der Erfindung.

### Beschreibung der Ausführungsbeispiele

Zu einem in Figur 1 in Seitenansicht dargestellten Wischhebel 10 gehören ein angetriebener Wischerarm 12 und eine mit diesem lösbar verbundenes Wischblatt 14. Die Verbindung zwischen dem Wischerarm 12 und dem Wischblatt 14 wird durch ein aus einem elastisch verformbaren Kunststoff hergestelltes Anschlusselement 16 erreicht, welches beim Ausführungsbeispiel fest mit dem Wischblatt 14 verbunden ist. Die Verbindung zwischen dem Anschlusselement 16 und dem Wischerarm 12 wird beim Ausführungsbeispiel durch eine lösbare Rastverbindung bewirkt, auf die später noch eingegangen wird. Der Wischerarm 12 - von dem in den Figuren lediglich ein kurzes Endstück dargestellt ist - wird über eine nicht dargestellte Antriebsvorrichtung in der erforderlichen Weise bewegt. Das Wischblatt 14 weist ein federelastisches, bandartig langgestrecktes, ein- oder mehrteiliges Tragelement 18 auf, an dessen von dem Wischerarm 12 abgewandten unteren Bandseite 20 eine langgestreckte, gummielastische Wischleiste 22 längsachsenparellel angeordnet ist. Das Wischblatt 14 ist mit einer an der Wischleiste 22 vorhandenen Wischlippe 24 an der Oberfläche 26 der zu wischenden Scheibe anlegbar. In Figur 1 ist die Oberfläche 26 dieser Scheibe als strichpunktierte Linie eingezeichnet. Es handelt sich dabei um die in aller Regel sphärisch gekrümmte Windschutzscheibe eines Kraftfahrzeuges. An der von dieser Scheibenoberfläche 26 abgewandten oberen Bandseite 28 des Tragelements 18 sitzt das Anschlusselement 16. Wie weiter aus Figur 1 ersichtlich ist, hat das noch nicht an der Scheibe angelegte, gekrümmte Wischblatt 14 eine stärkere Krümmung als die Scheibenoberfläche 26. Da die Linie 26 die stärkste Krümmung der Scheibenoberfläche darstellen soll ist klar ersichtlich, dass die Krümmung des mit seinen beiden Enden 17 an der Scheibe anliegenden, noch unbelasteten Wischblatts 14 stärker ist die maximale Scheibenkrümmung. Unter einem über den Wischerarm 12 ausgeübten, in Richtung des Pfeiles 30 (Figur 1) wirkenden Anpressdrucks legt sich das Wischblatt 14 mit seiner Wischleiste 22 beziehungsweise mit deren Wischlippe 24 über seine gesamte Länge an der Scheibenoberfläche 24 an. Dabei baut sich im aus Metall gefertigten, federelastischen Tragelement 18 eine Spannung auf, welche für eine ordnungsgemäße Anlage der Wischleiste 20 über deren gesamte Länge an der Scheibe 26 sorgt. Weil die in aller Regel sphärisch gekrümmte Scheibe nicht einen Abschnitt einer Kugeloberfläche darstellt, muss sich das Wischblatt 14 gegenüber dem Wischerarm 12 während seiner quer zu seiner Längserstreckung erfolgenden Wischbewegung ständig der jeweiligen Lage und dem Verlauf der Scheibenoberfläche 26 anpassen können. Deshalb muss das Wischblatt 14 derartig gelenkig mit dem Wischerarm 12 verbunden sein, dass es eine Schwingbewegung (Doppelpfeil 32) gegenüber dem Wischerarm 12 ausführen kann. Die Schwingbewegung muss also in einer auf der Scheibe 26 stehenden Ebene erfolgen, welche in Richtung der Wischerarm-Längserstreckung ausgerichtet ist. Die Schwing- oder Pendelachse liegt somit quer zur Längserstreckung der Wischerarms 12 und quer zur Richtung des Anpressdrucks (Pfeil 30), mit welcher das Wischblatt 14zur Scheibe 26 belastet ist.

Im Folgenden soll nun auf die besondere Ausgestaltung dieser Gelenkverbindung -unter Zuhilfenahme der Figuren 2 bis 4 - näher eingegangen werden. Bei der Betrachtung der Figuren 2 und 4 ist zu berücksichtigen, dass aus Gründen der Übersichtlichkeit von dem Wischblatt 14 lediglich eine Teilabschnitt des ein- oder mehrteiligen Tragelements 18 dargestellt ist. Weiter zeigt die Figur 2 im Längsschnitt den Aufbau des Anschlusselements 16. Der Querschnitt des Wischerarms 12 ist im wesentlichen U-förmig (Figur 3). Er hat somit eine U-Basis 36, welche in die beiden U-Schenkel 38 übergeht. Die beiden U-Schenkel 38 weisen jeweils an ihren freien Enden gegeneinander gerichtete krallenartige Fortsätze 40 auf. Aus Figur 2 ist ersichtlich, dass diese Fortsätze zwei Krallenpaare umfassen, welche in Längsrichtung des Wischerarms 12 gesehen mit Abstand voneinander angeordnet sind. Die Figuren 2 und 3 zeigen weiter, dass das Anschlußelement 16 im wesentlichen zwei Teilbereiche aufweist, von denen der eine Teilbereich mit einem Längsabschnitt 42 in den von der U-Basis 36 und den U-Schenkeln 38 umgriffenen Raum angeordnet ist. Weiter ist der Längsabschnitt 42 mit einer Anschlagschulter 44 versehen, welche an der stirnseitigen Endfläche 46 des Wischerarms anliegt, wenn der Längsabschnitt 42 in der beschriebenen Weise vorschriftsmäßig im Wischerarm 12 angeordnet ist. An seiner von der U-Basis 36 abgewandten Seite ist der Längsabschnitt 42 des Anschlusselements 16 mit vier elastisch auslenkbaren Rastnasen 48 versehen, welche in ihrer Betriebsposition über die von der U-Basis 26 abgewandten Unterseite des Längsabschnitts 42 ragen. Sie sind jedoch gegen eine Rückstellkraft (Pfeil 50 in Figur 3) soweit auslenkbar, dass sie vollständig in den Querschnitt des Längsabschnitts 42 eintauchen können. Dazu ist der Längsabschnitt 42 im Bereich dieser vier Rastnasen 48 mit partiellen Ausnehmungen 52 versehen.

An den mit den Anschlagschultern 44 versehenen Teilbereich des Längsabschnitts 42 schließt sich der andere Teilbereich des Anschlußelements, nämlich ein Endabschnitt 54 an, welcher im Querschnitt gesehen dem Längsabschnitt 42 im wesentlichen entspricht. Zwischen dem Längsabschnitt 42 und dem Endabschnitt 54 des Anschlusselements 16 dieses jedoch mit einer Einschnürung 56 versehen, welche sich im wesentlichen in Arbeitsrichtung des Wischerarms erstreckt. Beim Ausführungsbeispiel ist diese Einschnürung durch zwei einander gegenüberliegende, keilförmige Aussparungen 58 gebildet. Zwischen diesen einander gegenüberliegenden Aussparungen 58 verbleibt im Bereich der Einschnürung 56 ein die beiden Abschnitte (Längsabschnitt 42 und Endabschnitt 54 des Anschlusselements 16) verbindendes Gelenkstück 60. Da sich die Einschnürung 56 beziehungsweise die beiden die Einschnürung 56 bildenden Aussparungen 58 quer zur Längsrichtung des Wischerarms erstrecken, ergibt sich eine sich in Arbeitsrichtung des Wischerarms 12 erstreckende Pendel- oder Schwingachse, welche die erforderliche Schwingbewegung (Doppelpfeil 32 in Fig. 1) des Wischblatts gegenüber dem Wischerarm 12 ermöglicht. Zur Stabilisierung des so gebildeten Filmgelenks ist in den Körper 34 des Anschlusselements 16 eine Armierung 62 eingebettet. Diese ist in den Figuren 2 und 4 lediglich teilweise geschnitten gezeichnet. Eine perspektivische Darstellung dieser Armierung 62 zeigt Figur 5. Sie weist im wesentlichen zwei plattenartige Abschnitte 64 und 66 auf, welche über ein Zwischenstück 68 miteinander verbunden sind. Der Abschnitt 64 der aus einem Federbandstahl hergestellten Armierung 62 ist - wie die Figuren 2 und 4 zeigen - im Längsabschnitt 42 des Anschlußelements 16 untergebracht. Diese Anordnung ist dabei so getroffen, dass sich der Übergang 67 von dem plattenartigen Abschnitt 64 in das Zwischenstück 68 im Bereich des Gelenkstücks 60 befindet. Der sich an das Zwischenstück 68 anschließende andere plattenartige Abschnitt 66 - welcher in den Endabschnitt 54 des Anschlußelements 16 eingebettet ist - ist mit aus dem Endabschnitt 54 heraustretenden Krallen 70 aufweisenden Fortsätzen 69 versehen (Figur 4), welche so auf den Querschnitt des Tragelements 18 abgestimmt sind, dass dieses nach der Montage des Anschlußelements 16 am Wischblatt 14 passend von den Krallen 70 umgriffen wird. Durch weitere Maßnahmen, wie zum Beispiel Schweißen, Kleben, oder Klemmen, kann das Tragelement 18 und damit das Wischblatt 14 fest und praktisch unlösbar mit dem Endabschnitt 54 des Anschlusselements 16 verbunden werden. Die Krallen 70 bilden somit Fortsätze der Armierung 62, welche aus dem Endabschnitt 54 des Anschlusselements 16 heraustreten und zur Verbindung des Wischblatts 14 mit dem Anschlusselement 16 dienen.

Zur Montage des Wischhebels 10 wird zunächst das Anschlusselement 16 mit seinem wischblattseitigen Teil 54 in der eben beschriebenen Weise über die Krallen 70 mit dem Wischblatt 14 fest verbunden. Es ergibt sich somit die in Figur 4 dargestellte Zwischen-Montagestellung. Danach wird das Wischblatt 14 mitsamt dem Anschlusselement 16 beziehungsweise mit dem wischerarmseitigen Teil 42 in Richtung des Pfeiles 72 (Figur 4) in den Raum zwischen der U-Basis 36 und den U-Schenkeln 38 eingeschoben. Mit fortschreitender Einschubbewegung lenken dabei die vier Rastnasen 48 entgegen einer Rückstellkraft (Pfeile 50) in ihre Ausnehmungen 52 aus, wenn die vier krallenartige Fortsätze 40 des Wischerarms an diesen anschlagen. Die Montagebewegung (Pfeil 72) wird durch die Anschlagschultern 44 begrenzt, an welche die Stirnseite 46 des Wischerarms 12 zur Anlage kommt. In dieser Endposition federn die vier Rastnasen 48 wieder in ihre Ausgangspositionen zurück und hintergreifen die vier krallenartigen Fortsätze 40 des Wischerarms 12 (Figur 2). Dies wird durch eine entsprechende Abstimmung der Rastnasen 48 auf die Positionierung der Fortsätze 40 und auf die darauf abgestimmte Anordnung der Anschlagschultern 44 erreicht.

Es versteht sich von selbst, dass der Querschnitt des Gelenkstücks 60 auf die Erfordernisse hinsichtlich einer ordnungsgemäßen Anpassung des Wischblatts an den Scheibenverlauf abgestimmt wird. Dazu kann es notwendig sein, dass die Einschnürung 56 nicht nur die beiden Aussparungen 58 beeinflusst wird, sondern dass auch zusätzlich noch weitere querschnittsbeeinflussende Maßnahmen getroffen werden. Diese können am Längsabschnitt 42 und/oder auch an der Armierung 62 vorgenommen werden. Aus Figur 5 ist ersichtlich, dass dazu zwischen dem plattenartigen Abschnitt 64 und dem Zwischenstück 68 Ausklinkungen 74 vorgenommen worden sind.

Eine andere Ausführungsform der Erfindung ist in Figur 6 dargestellt. Dort ist an dem Wischerarm 112 ein blockartiges, aus einem elastischen Kunststoff gefertigtes Anschlusselement 116 angeordnet, welches die Gelenkverbindung zum Wischblatt 114 sicherstellt. Durch das Anschlusselement 116 sind zumindest Teilbereiche des zu einem Wischblatt gehörenden Tragelements 118 hindurch geführt.

Mit Abstand vom Tragelement 118 ist das blockartige Anschlusselement 116 mit einer Wand 122 des Wischerarms 112 fest verbunden. Im Bereich zwischen dem Wischerarm 112 und dem Tragelement 118 ist das blockartige Anschlusselement 116 mit randoffenen, schlitzartigen Ausnehmungen 120 versehen, welche den Querschnitt des Anschlusselements soweit verringern, dass zwischen diesen ein Gelenkstück 160 verbleibt. Die randoffenen Ausnehmungen 120 erstrecken sich vorzugsweise im wesentlichen in Arbeitsrichtung des Wischerarms. Sie können jedoch auch über die Längsseiten des Anschlusselements fortgeführt werden, so dass sie das blockartige Anschlusselement 116 umgeben. Anordnung und Ausgestaltung der randoffenen Ausnehmungen 120 sind so getroffen, dass die für das Wischblatt notwendige Pendelbewegung gegenüber dem Wischerarm 112 sichergestellt ist.

Die Verbindung zwischen dem Anschlusselement 116 und dem Wischblatt beziehungsweise dem Tragelement 118 kann beispielsweise dadurch erreicht werden, dass an das Anschlusselement 116 Krallen oder Durchbrüche angeformt werden, welche denen entsprechen, welche beim schon beschriebenen Ausführungsbeispiel in Figur 5 mit der Bezugszahl 70 versehen worden sind. Nach dem Aufbringen des Anschlusselements 116 auf das Tragelement 118 kann eine dauerhafte Verbindung durch Vulkanisation oder Kleben erreicht werden. Doch ist es denkbar das Anschlusselement direkt an das Tragelement anzuformen, das heißt auf das Tragelement 118 aufzuspritzen. Die Verbindung zwischen dem Wischerarm 112 und dem Anschlusselement 116 kann ebenfalls durch Kleben oder Vulkanisation erreicht werden.

Beiden Ausführungsformen ist gemeinsam, dass alle zum Gelenk gehörenden Teile - nämlich die Gelenkstücke 60 beziehungsweise 160 - am Anschlusselement 16 beziehungsweise 116 ausgebildet sind.

Eine Nutzung der Erfindung ist also schon dann gegeben, wenn entweder das Wischblatt und/oder der Wischerarm entsprechend der hier hinsichtlich des Gelenks gegebenen und beanspruchten Offenbarung ausgebildet ist.

## Patentansprüche

1. Vorrichtung zum lösbaren Verbinden eines Wischblatts (14) zum Reinigen von Scheiben insbesondere von Kraftfahrzeugen mit einem angetriebenen Wischerarm (12), die ein mit beiden Bauteilen (12 und 14) verbindbares Anschlusselement (16, 116) aufweist und das zur Scheibe belastete Wischblatt (14) um die Achse eines quer zur Längserstreckung des Wischerarms (12) und quer zur Belastungsrichtung (30) des Wischblatts ausgerichteten Gelenks pendelbar ist, wobei alle zum Gelenk gehörenden Teile am Anschlusselement (16, 116) ausgebildet sind und das Anschlusselement sowohl mit dem Wischblatt als auch mit dem Wischerarm fest verbindbar ist, **dadurch gekennzeichnet, dass** das Anschlusselement (16, 116) aus einem elastisch verformbaren Kunststoff hergestellt und das Gelenk als Einschnürung des Anschlusselements (16, 116) ausgebildet ist.

2. Vorrichtung nach Anspruch 1, **dadurch gekennzeichnet, dass** sich die Einschnürung (56) im wesentlichen in Arbeitsrichtung des Wischerarms (12 beziehungsweise 112) erstreckt.

3. Vorrichtung nach einem der Ansprüche 1 oder 2, **dadurch gekennzeichnet, dass** die Einschnürung durch zwei einander gegenüberliegende, vorzugsweise keilförmige Aussparung (58) gebildet ist, zwischen denen ein die beiden so gebildeten Teile (42, 54) des Anschlusselements (16) verbindbares Gelenkstück (60) verbleibt.

4. Vorrichtung nach Anspruch 3, **dadurch gekennzeichnet, dass** das Gelenkstück (60) durch stabilisierende Mittel (62) armiert ist.

5. Vorrichtung nach Anspruch 4, **dadurch gekennzeichnet, dass** die stabilisierenden Mittel durch ein in den beiden Teilen (42, 54) des Anschlusselements (16) verankertes Federstahlband (62) gebildet sind.

6. Vorrichtung nach einem der Ansprüche 1 bis 5, **dadurch gekennzeichnet, dass** das eine, wischerarmseitige Teil (42) des Anschlusselements (16) mit dem Wischerarm (12) verrastbar ist.

7. Vorrichtung nach einem der Ansprüche 5 oder 6, **dadurch gekennzeichnet, dass** das im anderen, wischblattseitigen Teil (54) des Anschlusselements (16) verankerte Ende des Federstahlbandes mit Fortsätzen (69) aus dem Anschlusselement heraustritt und mit Mitteln (70) zum Verbinden des Wischblatts (14) mit dem wischblattseitigen Teil des Anschlusselements versehen ist.

8. Vorrichtung nach Anspruch 7, **dadurch gekennzeichnet, dass** die aus dem wischblattseitigen Teil des Anschlusselements (16) heraustretenden Verbindungsmittel krallenförmig ausgebildet sind und diese Krallen (70) ein bandartig langgestrecktes, federelastisches Tragelement (18) des Wischblatts fest umgreifen, an dessen einen, oberen Bandseite (28) sich der Wischerarm (12) befindet und an dessen anderen, unteren Bandseite (20) eine die Wischarbeit ausführende, langgestreckte, gummielastische, zum Wischblatt (14) gehörende Wischleiste (22) angeordnet ist.

9. Vorrichtung nach Anspruch 3, **dadurch gekennzeichnet, dass** das Anschlusselement blockartig ausgebildet ist, dass es an einer dem Wischblatt zugewandten Wand (122) des Wischerarms (112) angeordnet ist, dass mit Abstand von dieser Wand Haltemittel des Anschlusselements am Wischblatt angreifen und dass zwischen diesen Haltemitteln und der Wand das Anschlusselement (116) derart eingeschnürt ist, dass das die Wischblatt-Pendelbewegung ermöglichende Gelenkstück (160) verbleibt.

## Claims

1. Device for detachably connecting a wiper blade (14) for cleaning panes, in particular panes of motor vehicles, to a driven wiper arm (12), which has a connection element (16, 116), which can be connected to both components (12 and 14), and the wiper blade (14), which is loaded towards the pane, can be moved to oscillate about the axis of a joint aligned transversely to the longitudinal extent of the wiper arm (12) and transversely to the direction (30) in which the wiper blade is loaded, all the parts associated with the joint being formed on the connection element (16, 116), and the connection element being fixedly connectable both to the wiper blade and to the wiper arm, **characterized in that** the connection element (16, 116) is produced from an elastically deformable plastic and the joint is designed as a neck of the connection element (16, 116).

2. Device according to Claim 1, **characterized in that** the neck (56) extends essentially in the working direction of the wiper arm (12 or 112).

3. Device according to either of Claims 1 and 2, **characterized in that** the neck is formed by two mutually opposite, preferably wedge-shaped recesses (58), between which there remains a joint piece (60), which can connect the two parts (42, 54), thus formed, of the connection element (16).

4. Device according to Claim 3, **characterized in that** the joint piece (60) is reinforced by stabilizing means (62).

5. Device according to Claim 4, **characterized in that** the stabilizing means are formed by a spring-steel band (62), which is anchored in the two parts (42, 54) of the connection element (16).

6. Device according to one of Claims 1 to 5, **characterized in that** one part of the connection element (16), the part (42) on the wiper-arm side, can be latched to the wiper arm (12).

7. Device according to either of Claims 5 and 6, **characterized in that that** end of the spring-steel band which is anchored in the other part (54) of the connection element (16), the part on the wiper-blade side, emerges by means of extensions (69) from the connection element and is provided with means (70) for connecting the wiper blade (14) to the part of the connection element on the wiper-blade side.

8. Device according to Claim 7, **characterized in that** the connecting means emerging from the part of the connection element (16) on the wiper-blade side are of claw-shaped design, and these claws (70) engage fixedly around a wiper-blade support element (18), which is elongate in the manner of a band and has spring elasticity, and on one, upper band side (28) of which the wiper arm (12) is situated and on the other, lower band side (20) of which an elongate, rubber-elastic wiper strip (22), which performs the wiping work and belongs to the wiper blade (14), is arranged.

9. Device according to Claim 3, **characterized in that** the connection element is of block-type design, **in that** it is arranged on a wall (122) of the wiper arm (112) that faces the wiper blade, **in that** holding means of the connection element engage on the wiper blade at a distance from this wall, and **in that**, between these holding means and the wall, the connection element (116) is necked in such a way that the joint piece (160) that allows the oscillating motion of the wiper blade remains.

## Revendications

1. Dispositif de liaison amovible d'un balai d'essuie-glace (14) notamment de véhicule automobile à un bras d'essuie-glace (12), entraîné, ce dispositif comportant un élément d'accouplement (16, 116) relié aux deux pièces (12, 14), et dont le balai d'essuie-glace (14) poussé contre la vitre effectue un mouvement pendulaire autour de l'axe d'une articulation alignée transversalement à l'extension longitudinale du bras d'essuie-glace (12) et transversalement par rapport à la direction de sollicitation (30) du balai d'essuie-glace, toutes les parties de l'articulation étant réalisées sur l'élément d'accouplement (16, 116) relié fermement à la fois au balai d'essuie-glace et au bras d'essuie-glace,
**caractérisé en ce que**
l'élément d'accouplement (16, 116) est fabriqué en une matière plastique déformable élastiquement et l'articulation est réalisée sous la forme d'une zone rétrécie de l'élément d'accouplement (16, 116).

2. Dispositif selon la revendication 1,
**caractérisé en ce que**
la partie rétrécie (56) s'étend principalement dans la direction active du bras d'essuie-glace (12, 112).

3. Dispositif selon l'une des revendications 1 ou 2,
**caractérisé en ce que**
la partie rétrécie est formée par deux dégagements (58) opposés, de préférence en forme de coins, entre lesquels subsiste une pièce d'articulation (60) reliant les deux parties (42, 54) ainsi formées de l'élément d'accouplement (16).

4. Dispositif selon la revendication 3,
**caractérisé en ce que**
la pièce d'articulation (60) est armée par un agent de renforcement (62).

5. Dispositif selon la revendication 4,
**caractérisé en ce que**
les moyens de stabilisation sont formés par un ruban d'acier à ressort (62) accroché dans les deux parties (42, 54) de l'élément d'accouplement (16).

6. Dispositif selon l'une des revendications 1 à 5,
**caractérisé en ce qu'**
une première partie (42) prévue du côté du bras d'essuie-glace et appartenant à l'élément d'accouplement (16) peut être accrochée au bras d'essuie-glace (12).

7. Dispositif selon l'une des revendications 5 ou 6,
**caractérisé en ce que**
l'extrémité du ruban d'acier à ressort accrochée dans l'autre partie (54) de l'élément d'accouplement (16), du côté du balai d'essuie-glace, comporte des prolongements (69) sortant de l'élément d'accouplement et des moyens (70) pour relier le balai d'essuie-glace (14) à cette partie de l'élément d'accouplement situé du côté du balai d'essuie-glace.

8. Dispositif selon la revendication 7,
**caractérisé en ce que**
les moyens de liaison sortant de la partie de l'élément d'accouplement (16) situés du côté du balai d'essuie-glace ont une forme de griffe et ces griffes (70) entourent fermement un élément de support (18) ayant l'élasticité d'un ressort, allongé en forme de ruban et appartenant au balai d'essuie-glace, et dont la face supérieure (28) correspond au bras d'essuie-glace (12) et l'autre face, ou face inférieure du ruban (20) porte une lame d'essuyage (22), allongée, ayant l'élasticité du caoutchouc pour effectuer un travail d'essuyage et faisant partie du balai d'essuie-glace (14).

9. Dispositif selon la revendication 3,
**caractérisé en ce que**
l'élément d'accouplement est en forme de bloc, prévu sur une paroi (122) du bras d'essuie-glace (112) tournée vers le balai d'essuie-glace,
et à distance de cette paroi, des moyens de fixation de l'élément d'accouplement tiennent le balai d'essuie-glace et
entre ces moyens de fixation et la paroi l'élément d'accouplement (116) a un rétrécissement suffisant pour conserver en place la pièce d'articulation (160) permettant le mouvement pendulaire du balai d'essuie-glace.
